(19) **Europäisches Patentamt / European Patent Office / Office européen des brevets**

(11) **EP 1 552 538 B1**

(12) **EUROPÄISCHE PATENTSCHRIFT**

(45) Veröffentlichungstag und Bekanntmachung des Hinweises auf die Patenterteilung:
**10.12.2008 Patentblatt 2008/50**

(51) Int Cl.:
**H01G 9/155** (2006.01)

(21) Anmeldenummer: **03775063.5**

(22) Anmeldetag: **17.10.2003**

(86) Internationale Anmeldenummer:
**PCT/DE2003/003450**

(87) Internationale Veröffentlichungsnummer:
**WO 2004/038742 (06.05.2004 Gazette 2004/19)**

(54) **DOPPELSCHICHT-KONDENSATOR, DESSEN VERWENDUNG SOWIE EIN VERFAHREN ZUR ERHÖHUNG DER MAXIMALEN LADUNGEN VON DOPPELSCHICHT-KONDENSATOR-ELEKTRODEN**

DOUBLE-LAYER CAPACITOR, USE OF THE SAME, AND METHOD FOR INCREASING THE MAXIMUM CHARGES OF DOUBLE-LAYER CAPACITOR ELECTRODES

CONDENSATEUR A DOUBLE COUCHE, SON UTILISATION ET UN PROCEDE PERMETTANT D'AUGMENTER LES CHARGES MAXIMALES D'ELECTRODES DU CONDENSATEUR A DOUBLE COUCHE

(84) Benannte Vertragsstaaten:
**AT BE BG CH CY CZ DE DK EE ES FI FR GB GR HU IE IT LI LU MC NL PT RO SE SI SK TR**

(30) Priorität: **18.10.2002 DE 10248752**

(43) Veröffentlichungstag der Anmeldung:
**13.07.2005 Patentblatt 2005/28**

(73) Patentinhaber: **EPCOS AG**
**81669 München (DE)**

(72) Erfinder:
- **KIRCHNER, Edith**
  **91058 Erlangen (DE)**
- **LANDES, Harald**
  **90607 Rückersdorf (DE)**
- **MICHEL, Hartmut**
  **89520 Heidenheim (DE)**
- **SCHRICKER, Barbara**
  **91058 Tennenlohe (DE)**
- **SCHWAKE, Andree**
  **89520 Heidenheim (DE)**
- **WEBER, Christoph**
  **89518 Heidenheim (DE)**

(74) Vertreter: **Epping - Hermann - Fischer Patentanwaltsgesellschaft mbH Ridlerstraße 55 80339 München (DE)**

(56) Entgegenhaltungen:
**US-A- 5 841 627     US-B1- 6 201 686**

- **FRIES N ET AL: "UltraCap double layer capacitors - a new energy storage device for peak power applications" PROCEEDINGS OF THE INTERNATIONAL POWER CONVERSION CONFERENCE, Bd. 41, 2000, XP009028175 Nürnberg**
- **CONWAY B E ET AL: "The role and utilization of pseudocapacitance for energy storage by supercapacitors" , JOURNAL OF POWER SOURCES, ELSEVIER SEQUOIA S.A. LAUSANNE, CH, VOL. 66, NR. 1-2, PAGE(S) 1-14 XP004082296 ISSN: 0378-7753 das ganze Dokument**
- **BURKE A: "Ultracapacitors: why, how, and where is the technology" , JOURNAL OF POWER SOURCES, ELSEVIER SEQUOIA S.A. LAUSANNE, CH, VOL. 91, NR. 1, PAGE(S) 37-50 XP004214410 ISSN: 0378-7753 das ganze Dokument**
- **KOTZ R ET AL: "Principles and applications of electrochemical capacitors" , ELECTROCHIMICA ACTA, ELSEVIER SCIENCE PUBLISHERS, BARKING, GB, VOL. 45, NR. 15-16, PAGE(S) 2483-2498 XP004206798 ISSN: 0013-4686 das ganze Dokument**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Kondensatoren, beispielsweise Doppelschichtkondensatoren, werden auch in Anwendungen mit hohen Leistungsanforderungen eingesetzt, da sie sich mit hohen Kapazitäten bei gleichzeitig sehr kleinem ESR verwirklichen lassen. Beispielsweise als temporärer Energiespeicher genutzt müssen Doppelschichtkondensatoren in relativ kurzen Zeiträumen von einigen Sekunden und weniger hohe Ströme und damit verbunden hohe Energien abgeben oder aufnehmen. Die Betriebsspannungen von Doppelschichtkondensatoren liegen meist bei nur wenigen Volt. Da die Anwendungen aber meist wesentlich höhere Spannungen erfordern, werden häufig mehrere Doppelschichtkondensatoren in Reihe zu einer Kondensatorbatterie geschaltet. Aufgrund der großen Anzahl von einzelnen Kondensatoren ist damit das Zusammensetzen einer Kondensatorbatterie häufig sehr kostenintensiv. Deshalb werden Kondensatoren mit möglichst hohen Betriebsspannungen gesucht. Die Betriebsspannung eines Kordensators ist umso größer, je später beim Landen des Kondensators die kritischen Korrosionsströme erreicht werden. Eine hohe Betriebsspannung bedingt eine höhere Leistungs- und Energiedichte des Kondensators. Die Nennspannung eines Kondensators wird dabei durch die Differenz der Korrosionspotentiale der Kondensator-Elektroden und des Elektrolyten nach oben begrenzt. Befindet sich eine Elektrode auf einem Potential im Korrosionsbereich, so kann es nachteiligerweise infolge von elektrochemischen Reaktionen zu einer Korrosion der Elektrode oder zu einer Zersetzung des Elektrolyten, wobei auch Gasentwicklung stattfinden kann, kommen, wobei die Lebensdauer des Kondensators stark verringert wird. Um dies zu vermeiden, werden Kondensatoren in der Regel nur bei Betriebsspannungen eingesetzt, bei denen die resultierenden Einzelelektrodenpotentiale außerhalb des Korrosionspotentials bleiben.

Aus US 6,064,562 ist ein elektrischer Doppelschichtkondensator bekannt, der positive und negative polarisierende Elektroden aus zwei verschiedenen, Kohlenstoff-haltigen Materialien, wie zum Beispiel aktivierter Kohlenstoff, aufweist.

Aus US 6,222,723 B1 ist ein asymmetrischer elektrochemischer Kondensator bekannt, der zumindest eine größere Kapazitätselektrode und eine kleinere Kapazitätselektrode mit einem zwischen diesen angeordneten Elektrolyten aufweist. Die größere Kapazitätselektrode hat eine größere absolute Kapazität als die kleinere Kapazitätselektrode.

Ziel der vorliegenden Erfindung ist es daher, einen Doppelschicht-Kondensator mit erhöhter Leistungs- und Energiedichte zur Verfügung zu stellen, der bei höheren Spannungen betrieben werden kann.

Diese Aufgabe wird mit einem Doppelschicht-Kondensator nach Anspruch 1 gelöst. Vorteilhafte Ausgestaltungen des Kondensators sowie dessen Verwendung und ein Verfahren zur Erhöhung der maximalen, potentialabhängigen Ladungen der Kondensator-Elektroden sind Gegenstand von weiteren Ansprüchen.

Aus dem Stand der Technik ist bekannt, daß die maximale Ladung eines Kondensators, die vorteilhafterweise möglichst groß sein soll, von dessen maximaler Betriebsspannung abhängig ist, also von der Potentialdifferenz, die zwischen den beiden Elektroden des Kondensators maximal anliegen darf.

Die Erfinder haben gefunden, daß in Abhängigkeit vom verwendeten Elektrolyt-System die einzelnen Doppelschicht-Kondensator-Elektroden bei entgegengesetzter Polung, also bei Verschaltung als positiv oder negativ geladene Elektrode, überraschenderweise unterschiedliche maximale Ladungsmengen aufnehmen können. Die maximale aufnehmbare Ladung ist dabei jene Ladungsmenge, die der Elektrode bis zur Erreichung des kritischen Potentials zugeführt werden kann. Diese elektrische Eigenschaft der Elektroden wird im folgenden als maximale Ladung bezeichnet.

Dieser hier neu gefundene Effekt ist offenbar einerseits auf die unterschiedlichen Abstände der Korrosionspotentiale der Elektroden von ihren Ruhepotentialen und andererseits auf das unterschiedliche Verhalten der Anionen und Kationen der Elektrolytlösung in der elektrochemischen Doppelschicht zurückzuführen. Dabei spielen die unterschiedlichen Volumina der solvatisierten, positiv und negativ geladenen Ionen genauso eine wichtige Rolle, wie deren Beweglichkeit in der Elektrolytlösung und die Ladungszahl (Wertigkeit) der jeweiligen Ionen.

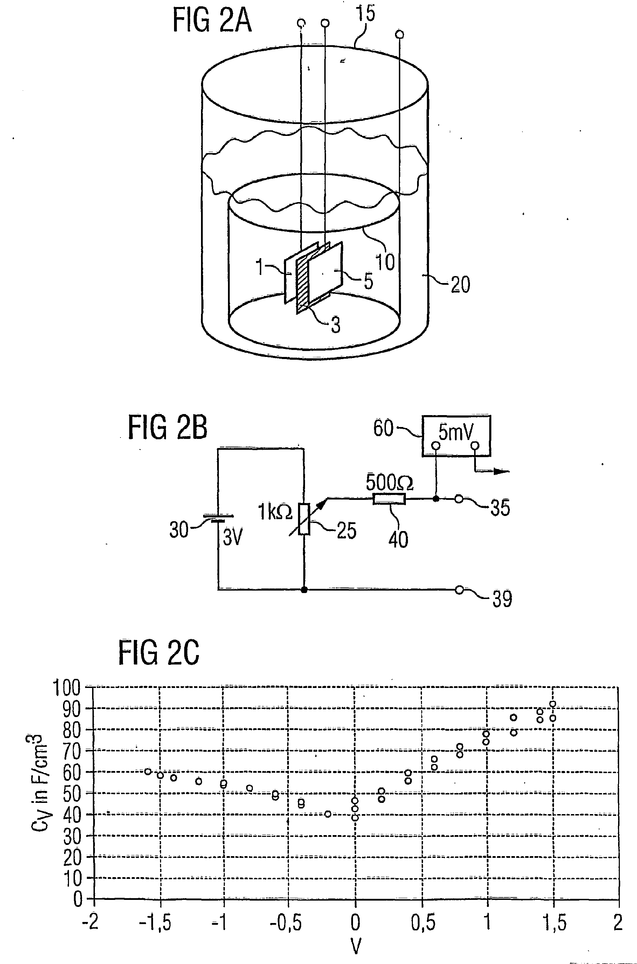

Der Effekt der unterschiedlichen maximalen Ladungen der Elektroden tritt auch bei entgegengesetzt geladenen Elektroden auf, die aus dem gleichen Elektrodenmaterial mit den gleichen Abmessungen bestehen (siehe Fig. 2C). Diese überraschend gefundenen unterschiedlichen Abhängigkeiten der Kapazität der beiden entgegengesetzt geladenen Elektroden vom angelegten Potential, haben zur Folge, daß die Elektroden in einem Doppelschicht-Kondensator im geladenen Zustand unterschiedliche Potentialabstände von ihrem Ruhepotential aufweisen. Die reversibel austauschbare Maximalladung eines Doppelschicht-Kondensators hängt allein von der Differenz der Elektrodenpotentiale in dem Ladungszustand ab, bei dem eine Elektrode als erste das Korrosionspotential erreicht. Die zweite Elektrode ist dabei noch von ihrem Korrosionspotential entfernt, könnte also noch weitere Ladung aufnehmen. Damit kann das für diese zweite Elektrode eingesetzte Materialvolumen nicht vollständig zur Energiespeicherung genutzt werden. Da herkömmliche, kommerziell erhältliche Doppelschicht-Kondensatoren in der Regel Elektroden aufweisen, die aus dem gleichen Elektrodenmaterial mit den gleichen Abmessungen bestehen, sind die Energiedichten von herkömmlichen Doppelschicht-Kondensatoren und ihr Materialeinsatz pro gespeicherter elektrischer Ladung somit nicht optimal.

Die Erfinder haben auch gefunden, daß die unterschiedlichen maximalen Ladungen der Elektroden nicht nur durch die Polung und den Elektrolyt, sondern auch durch die Abmessungen, die Bauform (Design), die Masse sowie die Oberflächengröße und Oberflächenstrukturen der Elektroden beeinflußt werden. Somit ergibt sich die Möglichkeit, die maximalen Ladungen der Elektroden, die am jeweiligen Korrosionspotential verschieden sind, aneinander anzugleichen, was bei herkömmlichen Doppelschichtkondensatoren nicht der Fall ist.

Die Erfindung beschreibt deshalb einen Doppelschicht-Kondensator, bei dem zumindest eine erste und zweite Elektrode vorhanden sind, wobei sich beide Elektroden in Kontakt mit einem Elektrolyten befinden. Bei dem Doppelschicht-Kondensator sind die von der Polung der Elektroden abhängigen und gegenüber einer Referenzelektrode bestimmten maximalen Ladungen der Elektroden aneinander angepaßt. Unter Elektroden im Sinne der Erfindung werden elektronenleitende Materialien verstanden, die in Kontakt mit einem Elektrolyten stehen, wobei Medien, die ausschließlich Ionen leiten, als Elektrolyte bezeichnet werden.

Ein erfindungsgemäßer Doppelschicht-Kondensator hat gegenüber einem herkömmlichen Doppelschicht-Kondensator den Vorteil, daß der Materialeinsatz pro gespeicherter elektrischer Ladung verringert ist.

Bei einem herkömmlichen Doppelschicht-Kondensator sind die gegenüber einer Referenzelektrode bestimmten maximalen Ladungen der Einzelelektroden nicht angepaßt, da bislang noch nicht die Kenntnis vorlag, daß die Einzelelektroden unterschiedliche maximale Ladungen zeigen, die von der Polung der Elektrode, dem Elektrodenmaterial und dem Design abhängig sind. So unterscheiden sich beispielsweise herkömmliche Doppelschicht-Kondensatorelektroden bei einer Potentialdifferenz von $\pm$ 1 V gegenüber dem Ruhepotential um 10% und bei $\pm$ 1,5 V um 12. % in der Ladung. Dieser Effekt führt dazu, daß beispielsweise bei einer Kondensatorspannung von 2,4V ein Unterschied von mindestens 39% in den Beträgen der auf das Ruhepotential bezogenen Einzelpotentiale der Elektroden resultiert.

Die Elektroden eines erfindungsgemäßen Doppelschicht-Kondensators weisen dabei unterschiedliche kapazitätsbildende Oberflächen auf. Das bedeutet, daß die maximalen Ladungen der Elektroden dadurch einander angeglichen sind, daß die Größe der Oberflächen der Elektroden, oder ihre Oberflächenstruktur unterschiedlich sind. Die Struktur der inneren Oberfläche einer Elektrode bestimmt die elektrochemische Doppelschicht, die sich in elektrochemischen Doppelschichtkondensatoren beim Laden des Kondensators ausbildet.

Weiterhin können bei einer Variante eines erfindungsgemäßen Doppelschicht-Kondensators, bei der die Elektroden das gleiche Elektrodenmaterial umfassen, die Massen der jeweiligen Elektroden unterschiedlich sein. Dies bedeutet, daß bei gleichen Elektrodenmaterialien aber unterschiedlichen Massen, beispielsweise bei Elektroden mit unterschiedlichen Schichtdicken, auch die Größe der inneren Oberflächen der Elektroden unterschiedlich sind, so daß aneinander angepaßte maximale Ladungen resultieren.

In einer weiteren vorteilhaften Ausgestaltung eines erfindungsgemäßen Doppelschicht-Kondensators weisen beide Elektroden des Kondensators im maximale geladenen Zustand eine Ladung Q auf, die durch folgende Gleichung gegeben ist:

$$Q = V^+ Q^+_{V\,max} = V^- Q^-_{V\,max}$$

wobei

$$Q^+_{V\,max} = \int_0^{\varphi_+^{max}} c_V(\varphi)\,d\varphi$$

und

$$Q^-_{V\,max} = \int_0^{\varphi_-^{max}} -c_V(\varphi)\,d\varphi = Q^-_{V\,max}$$

wobei $Q^+_{Vmax}$ und $Q^-_{Vmax}$ die maximalen, volumenbezogenen Ladungsdichten der positiven bzw. negativen Elektrode, $V^+$ und $V^-$ die Volumina der positiven bzw. negativen Elektrode, $\varphi$ das elektrische Potential, ($\varphi^{-min}$ und $\varphi^{+max}$ die elektrischen Potentiale sind, bei denen noch keine Korrosion der Elektroden stattfindet und $C_V$ die volumenbezogene, differentielle Kapazität im für die jeweilige Elektrode gültigen Potentialbereich sind.

Die Produkte aus den jeweiligen maximalen volumenbezogenen Ladungsdichten und den jeweiligen Elektrodenvolumina, also die maximalen Ladungen beider Elektroden sind in etwa gleich groß, so daß das Materialvolumen beider Elektroden weitgehend vollständig zur Energiespeicherung genutzt werden kann. Die maximalen, volumenbezogenen Ladungsdichten $Q^+_{Vmax}$ und $Q^-_{Vmax}$ der Elektroden im Sinne der Erfindung sind ebenfalls materialspezifisch und geben diejenige maximale Ladung pro Volumeneinheit der Elektrode an, die der Elektrode zugeführt werden kann, ohne daß sie das Korrosionspotential erreicht. Die kritischen Ladungsdichten bzw. Potentiale können durch einen Fachmann beispielsweise durch Leckstrommessungen (siehe Figuren 2A und 2B) bestimmt werden.

In einer weiteren Variante des erfindungsgemäßen Doppelschicht-Kondensators können die zwei Elektroden das gleiche Elektrodenmaterial umfassen, wobei im maximal geladenen Zustand des Kondensators dann das Produkt aus Masse M+ oder M-der Elektrode und deren kritischer, massenbezogener Ladungsdichte $Q^+_{M,max}$ und $Q^-_{M,max}$ für beide Elektroden ungefähr gleich groß ist:

$$Q = Q^+_{max} = M^+ Q^+_{M,max} = M^- Q^-_{M,max} = Q^-_{max}$$

mit

$$Q^+_{M,max} = \int_0^{\varphi_+} c_M(\varphi_+)d\varphi_+ \quad \text{und} \quad Q^-_{M,max} = \int_0^{\varphi_-} c_M(\varphi_-)d\varphi_-$$

Dies bedeutet wie bereits oben beschrieben, daß die maximalen Ladungen der beiden Elektroden in etwa gleich groß sind, so daß das für die Elektroden eingesetzte Materialvolumen praktisch vollständig zur Energiespeicherung genutzt werden kann.

Unter Anpassen im Sinne dieser Erfindung wird vorzugsweise verstanden, die unterschiedlichen maximalen Ladungen der Elektroden eines Doppelschicht-Kondensators bis zum Erreichen der jeweiligen Korrosionspotentiale so anzugleichen, daß deren Differenz kleiner als bei herkömmlichen Doppelschicht-Kondensatoren ist, also bei Standardbetriebsspannungen von beispielsweise etwa 2V weniger als etwa 10% und bei Betriebsspannungen von 3V weniger als etwa 12% beträgt.

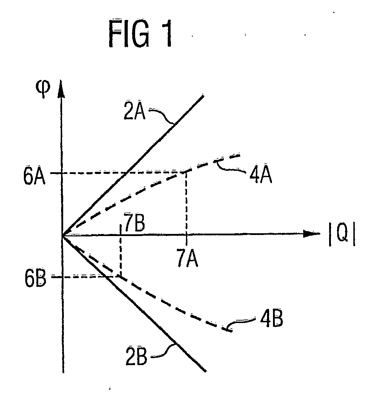

Anpassen kann dabei bedeuten, daß nach Bestimmung der maximalen Ladungen im gegenüber der Referenzelektrode negativen Potentialbereich, z.B. mittels der in den Fig. 1A und 1B gezeigten Meßanordnung, die maximale Ladung derjenigen Elektrode erhöht wird, deren maximale Ladung in den Messungen niedriger war. Die Erhöhung der Ladung kann wie bereits beschrieben beispielsweise durch eine Vergrößerung der Masse, des Volumens oder durch eine Änderung der chemischen Zusammensetzung der Elektrode vorgenommen werden. Erfindungsgemäße Doppelschicht-Kondensatoren mit derart angepaßten Elektroden weisen gegenüber herkömmlichen Doppelschicht-Kondensatoren höhere Leistungsdichten und erhöhte Betriebsspannungen auf. Es ist aber prinzipiell auch möglich, die maximale Ladung derjenigen Elektrode mit der höheren maximalen Ladung abzusenken und damit an die Elektrode mit der niedrigeren maximalen Ladung anzugleichen. Dies kann dadurch geschehen, daß die Oberfläche dieser Elektrode verkleinert wird. Bei gleichen Elektrodenmaterialien ist dabei auch eine Verringerung der Masse bzw. des Volumens dieser Elektrode möglich. Erfindungsgemäße Doppelschicht-Kondensatoren mit derart angepaßten Elektroden weisen höhere Betriebsspannungen auf, als herkömmliche Doppelschicht-Kondensatoren. Da für eine der Elektroden außerdem weniger Elektrodenmaterial benötigt wird, sind diese erfindungsgemäßen Doppelschicht-Kondensatoren bei gleicher Kondensatorkapazität billiger als herkömmliche Kondensatoren.

Bei erfindungsgemäßen Elektroden mit ungefähr gleichen maximalen, potentialabhängigen Ladungen können die Ladungen um bis zu 5% voneinander abweichen. Diese Abweichung ist unter anderem auf Meßfehler bei der Bestimmung der maximalen Ladungen zurückzuführen, die eine exakte Bestimmung dieser Größe in der Regel nicht erlaubten.

Bei erfindungsgemäßen Doppelschicht-Kondensatoren kann eine der Elektroden Kohlenstoff umfassen. Kohlenstoff-Elektroden bewirken eine Ladungsspeicherung vor allem über ihre große innere Oberfläche. Das Material der Elektrode kann aus einer Gruppe mit folgenden Materialien ausgewählt sein:

a) Kohlenstoffpulver,
b) Kohlenstoff-Fasern, z.B. Tücher, Vliese, Papiere oder Stränge
c) entmetallisierte Metallcarbide,
d) Kohlenstoffaerogele,
e) graphitischer Kohlenstoff,
f) nanostrukturierter Kohlenstoff,
g) mittels physical vapour deposition (PVD) und/oder chemical vapour deposition (CVD) aufgebrachter Kohlenstoff.

Kohlenstoffpulverelektroden, die beispielsweise aus Kohlenstoffpulver bestehen, das auf einer Aluminiumfolie aufgebracht ist, sind besonders vorteilhaft, da sich deren Schichtdicke auf der Aluminiumfolie besonders leicht variieren läßt. Auf diese Weise lassen sich besonders einfach erfindungsgemäße Elektroden realisieren, die aufgrund einer beispielsweise unterschiedlichen Dicke annähernd gleiche maximale Ladungen aufweisen. Als Kohlenstoff-Fasern kommen eine ganze Reihe von z.B. Tüchern mit zum Beispiel unterschiedlicher Webstruktur, Materialstärke und Materialdichte, in Betracht. Auch Vliese oder Papiere können eingesetzt werden. In Abhängigkeit von ihrer Struktur zeigen Kohlenstoff-Fasern dabei unterschiedliche volumenbezogene Kapazitäten, unterschiedliche Spannungsstabilitäten und Gasungstendenzen. Kohlenstoffelektroden mit einer großen Oberfläche lassen sich beispielsweise auch durch die Entfernung von metallischen Bestandteilen aus Metallcarbiden (entmetallisierte Metallcarbide) herstellen. Als Metallcarbide kommen z.B. SiC oder TiC in Betracht.

Kohlenstoffaerogele sind monolithische, offenporige Festkörper mit großer innerer Oberfläche (mehr als 1500 $m^2$/g bestimmt nach der BET-Methode), deren Strukturparameter während der Herstellung in einen Sol-Gel-Prozeß in einem weiten Bereich variiert werden können.

Auch bei Kohlenstoffelektroden, die aus graphitischem Kohlenstoff bestehen, lassen sich sehr hohe volumenbezogene Kapazitäten dadurch erreichen, daß beispielsweise der graphitische Kohlenstoff, zum Beispiel Koks, der aus Pech oder Petroleum gewonnen werden kann, mit einer Base, beispielsweise Kaliumhydroxid, bei hohen Temperaturen von ungefähr 700 bis 850° gebacken wird. Während dieses Verfahrens wird die Struktur des Kohlenstoffs geöffnet, so daß ebenfalls eine sehr große Oberfläche resultiert, die zur elektrostatischen Ladungsspeicherung eingesetzt werden kann.

Nanostrukturierter Kohlenstoff liegt in Form von sogenannten Nanofilamenten vor, die typischerweise einen Durchmesser im Nanometerbereich und Längen im Mikrometerbereich aufweisen.

Kohlenstoffelektroden mit hohen Oberflächen können auch dadurch hergestellt werden, daß beispielsweise mittels Chemical Vapour Deposition (CVD) Kohlenstoff aus der Gasphase abgeschieden wird. Mittels Physical Vapour Deposition (PVD) können ionisierte Kohlenstoffteilchen in einem elektrischen Feld aufgebracht werden.

Weiterhin ist es möglich, daß zumindest eine der Elektroden eines erfindungsgemäßen Doppelschicht-Kondensators aus einer Gruppe ausgewählt ist, die aus leitfähigen Polymeren, beispielsweise Polyanilin, leitfähigen Keramiken, zum Beispiel Titannitrid und Metallen oder Metallegierungen besteht und eine große Oberfläche aufweist.

Der Elektrolyt eines erfindungsgemäßen Doppelschicht-Kondensators kann dabei einen Gel- und/oder Polymerelektrolyten umfassen. Weiterhin ist es auch möglich, daß der Elektrolyt eine Elektrolytlösung ist, die organische und/oder wässrige Lösungsmittel umfaßt, wobei dann zusätzlich zwischen den Elektroden ein Separator angeordnet ist, der beispielsweise Papier, eine Polymermembran oder Glasfasern umfaßt.

Erfindungsgemäße Doppelschicht-Kondensatoren mit den unterschiedlichen Elektroden lassen sich auch als Schichtstapel realisieren. Dabei sind beide Elektroden als Schichten ausgeformt, wobei der Schichtstapel alternierende erste und zweite Elektrodenschichten mit dazwischen angeordneten Separatoren umfaßt. Die Separatoren und die Elektroden sind mit einer Elektrolytlösung getränkt.

Möglich ist es auch, die erste und zweite Elektrode, die als Schicht ausgeformt sind, mit dazwischen befindlichen Separatoren zu einem Kondensator-Wickel aufzurollen. Die Kontaktierung der Elektroden kann beispielsweise im Falle von Kohlenstoffelektroden, die auf einer Aluminiumfolie aufgebracht sind, durch überstehende Bereiche der Aluminiumfolie erfolgen. Anstelle von kreisförmigen Wickeln sind auch Flachwickel mit rechteckigen Formen möglich.

In einer weiteren Variante können die erfindungsgemäßen Doppelschicht-Kondensatoren auch Pseudokondensatoren umfassen, wobei in diesem Fall beide Elektroden entweder Metalloxide oder leitfähige Polymere umfassen. Das Metalloxid kann beispielsweise Rutheniumoxid, Iridiumoxid, oder Nickeloxid umfassen und das elektrisch leitfähige Polymer kann beispielsweise Polypyrrol, Polythiophen oder Polyanilin oder Derivate der genannten leitfähigen Polymere umfassen. Bei Pseudokondensatoren entstehen Pseudokapazitäten auf der Oberfläche der Elektroden durch Bewegung von elektrischen Ladungen, die durch Oxidations- und Reduktionsprozesse an den Elektroden entstehen.

Erfindungsgemäße Doppelschicht-Kondensatoren können auch in Kondensatorbatterien eingesetzt werden. Der Vorteil von Kondensatorbatterien, die aus den erfindungsgemäßen Kondensatoren bestehen, besteht darin, daß sie aus wesentlich weniger einzelnen Kondensatoren zusammengesetzt sind, da erfindungsgemäße Kondensatoren höhere Betriebsspannungen aufweisen als herkömmliche Kondensatoren.

Gegenstand der Erfindung ist weiterhin ein Verfahren zur Verringerung der Differenz zwischen den unterschiedlichen maximalen Ladungen einer ersten und einer zweiten Doppelschicht-Kondensatorelektrode mit entgegengesetzter Ladung. Das Verfahren besteht aus den Verfahrensschritten

A) das korrosionsfreie Potentialfenster des Elektrodenmaterials gemessen gegen eine Referenzelektrode wird bestimmt,

B) die maximalen, gegen eine Referenzelektrode gemessenen Ladungen der Elektrodenmaterialien der ersten und zweiten Elektrode werden bestimmt und danach werden im Verfahrensschritt

C) die maximalen Ladungen der beiden Elektroden angeglichen. angeglichen, und zwar derart, dass sie vorzugsweise um maximal 5% voneinander abweichen.

Im Verfahrensschritt A) kann dabei eine Potentialdifferenz zwischen der ersten Elektrode und der Referenzelektrode eingestellt werden und anschließend der Korrosionsstrom gemessen werden. Das zulässige Potentialgebiet wird dort verlassen, wo dieser Strom einen kritischen Grenzwert, z.B. 10 $\mu$A/cm$^2$ übersteigt. Im Verfahrensschritt B) wird anschließend die Elektrode in kurzer Zeit, z.B. 1 min. auf das kritische Potential gebracht und die dafür notwendige Ladung durch Integration des Stromes bestimmt. Dann wird dieser Vorgang auf der anderen Seite des zulässigen Potentialbereichs wiederholt. Diese Messung kann dabei mit den gleichen Elektroden oder mit Elektroden aus einem anderen Material erfolgen.

Im Verfahrensschritt C) wird beispielsweise die Oberfläche derjenigen Elektrode erhöht, die im Doppelschicht-Kondensator später auf der Seite des zulässigen Potentialfensters arbeiten soll, die die niedrigere maximale, potentialabhängige Ladungsdichte aufweist. Dies hat zur Folge, daß die Maximalspannung und die Gesamtkapazität eines Doppelschicht-Kondensators, der Elektroden enthält, die mittels dieses Verfahrens aneinander angepaßt wurden, höher ist als bei einem herkömmlichen Doppelschicht-Kondensator.

Die am positiven und am negativen Rand des korrosionsfreien Potentialfensters bestimmten Ladungsdichten der ersten und zweiten Elektrode werden dazu benutzt, das Volumen oder Massenverhältnis beider Elektroden gemäß untenstehender Gleichung zu berechnen und durch Veränderung der Masse bzw. des Volumens aneinander anzugleichen:

$$\frac{M^+}{M^-} = \frac{Q^-_{M,\,max}}{Q^+_{M,\,max}} \quad bzw. \quad \frac{V^+}{V^-} = \frac{Q^-_{V,\,max}}{Q^+_{V,\,max}}$$

In einer weiteren vorteilhaften Variante des Verfahrens wird in den Verfahrensschritten A) und B) für die erste und zweite Elektrode das gleiche Elektrodenmaterial mit dem gleichen Design und Abmessungen verwendet und dann im Verfahrensschritt C) die Masse oder das Volumen derjenigen Elektrode mit der niedrigeren kritischen Ladung erhöht. Eine Erhöhung der Masse oder des Volumens bedeutet, daß bei gleichen Elektrodenmaterialien mit gleichen Abmessungen die Oberfläche der Elektrode zunimmt und somit auch die kritische Ladung angehoben wird.

In einer weiteren vorteilhaften Variante des erfindungsgemäßen Verfahrens wird im Verfahrensschritt C) das Produkt

$$Q^+_{V,\,max} V^+ = Q^-_{V,\,max} V^- \quad bzw. \quad Q^+_{M,\,max} M^+ = Q^-_{M,\,max} M^-$$

für beide Elektroden ungefähr gleich groß eingestellt. Ist dieses Produkt etwa gleich groß, so sind die maximalen Ladungen der beiden Elektroden in etwa gleich groß. Dann ist auch die Gesamtkapazität und die Betriebsspannung eines Doppelschicht-Kondensators, der diese Elektroden enthält, auf einem Maximum.

Im folgenden soll die Erfindung anhand von Ausführungsbeispielen und Figuren noch näher erläutert werden.

Figur 1                    zeigt modellhaft die Abhängigkeit des Potentials von der Ladung.

Die Figuren 2A bis 2C      zeigen schematisch Meßanordnungen zur Bestimmung der potentialabhängigen Ladung einer Elektrode beziehungsweise durch die Messungen erhaltene Meßkurven.

Die Figuren 3A und 3B      zeigen einen schematischen Versuchsaufbau zur Leckstrommessung beziehungsweise eine mittels des Versuchsaufbaus bestimmte Meßkurve.

Figur 4                    zeigt eine mögliche Variante eines erfindungsgemäßen Doppelschicht-Kondensators.

Figur 5                    zeigt einen Kondensatorwickel als weiteres Ausführungsbeispiel eines erfindungsgemäßen Doppelschicht-Kondensators.

Figur 1 zeigt modellhaft die Abhängigkeit des Potentials $\varphi$ von der Ladung Q. Bei einem klassischen Plattenkondensator, bei dem beispielsweise zwei ebene Leiterplatten als Elektroden durch ein Dielektrikum, z.B. Luft, getrennt sind, ergibt sich sowohl bei positiven Potentialen, d.h. für die positive Elektrode, als auch bei negativen Potentialen, d.h. für die negative Elektrode, ein linearer Verlauf 2A bzw. 2B, wobei die Kapazität jeweils konstant ist.

Bei einem Doppelschichtkondensator stehen elektronenleitende Materialien (Elektroden) in Kontakt mit ionenleitenden Medien (Elektrolyten), wobei sich in der Realität beispielsweise die als 4A und 4B bezeichneten schematischen Abhängigkeiten des Potentials von der Ladung Q ergeben. Zu sehen ist, daß die jeweilige Abhängigkeit der Ladung vom Potential für positive und negative Potentiale unterschiedliche, insbesondere auch nicht lineare Verläufe aufweist, so daß die Kapazität vom Potential abhängig ist. Beim Doppelschichtkondensator kommmt es außerdem durch den Kontakt zwischen Elektronenleiter und Elektrolyt zu Korrosionserscheinungen, die potentialabhängig sind und zur Zerstörung der Komponenten führen können. Aufgrund der betragsmäßig unterschiedlichen positiven bzw. negativen kritischen Korrosionspotentiale 6A bzw. 6B in Fig. 1 resultieren unterschiedliche Projektionen 7A und 7B auf die Q-Achse. Diese stellen die jeweiligen unterschiedlichen maximalen Ladungen der Elektroden an ihren kritischen Korrosionspotentialen dar. Nun sollte ein Doppleschichtkondensator so betrieben werden, daß die Aufladung beendet wird, sobald eine der beiden Elektroden ihr Korrosionspotential erreicht hat (also die negative Elektrode das negative Korrosionspotential, die positive Elektrode das positive Korrosionspotential) . Die Ladungen beider Elektroden sind stets entgegengesetzt gleich und vom Betrag nach genauso groß, wie die dem Kondensator durch den äußeren Stromkreis zugeführte Ladung. Aufgrund der beschriebenen Potentialabhängigkeit der Elektrodenkapazität und der nicht entgegengesetzt gleich großen Abstände der Korrosionspotentiale vom Potential der noch ungeladenen Elektroden, wird i.A. eine der Elektroden früher als die andere ihr Korrosionspotential erreichen, so daß der Ladevorgang beendet werden muß, um Korrosion zu verhindern. Die zweite Elektrode ist dann noch von ihrem Korrosionspotential entfernt, könnte also noch Ladung aufnehmen. Damit kann das für diese Elektrode eingesetzte Materialvolumen nicht vollständig zur Energiespeicherung genutzt werden. Die Energiedichte des Doppelschicht-Kondensators und der Materialeinsatz pro gespeicherter elektrischer Ladung sind damit nicht optimal.

Die Tatsache, daß die prinzipiell nutzbare maximale Potentialdifferenz zwischen den Elektroden so nicht ausgenützt werden kann, führt zu einem weiteren Nachteil. Die maximale Ladespannung des Doppelschicht-Kondensator fällt kleiner aus, als der durch die Differenz der kritischen Elektrodenpotentiale gegebene maximal mögliche Wert. Da die Betriebsspannung einer Doppelschichtkondensatorzelle bei nur wenigen Volt liegt, die Anwendungen aber meist wesentlich höhere Spannungen erfordern, ist man daran interessiert, die Spannung der Einzelzelle möglichst hoch zu wählen, damit man zur Erreichung der Zielspannung möglichst wenige Zellen in Reihe schalten muß.

Wichtige Parameter, die zur Angleichung der maximalen Ladungen der Elektroden verändert werden können sind die Oberflächen-Eigenschaften der Elektrode, z.B. ihre kapazitiv wirksame Oberfläche, die unter anderem durch die Porosität und die Korngröße des Materials bestimmt werden, die Korrosionsstabilität der Elektroden und des Ableiters und die chemische Beschaffenheit des Elektrolyten, wie z.B. Wertigkeit und Ionenradien.

Figur 2A zeigt schematisch eine Versuchsanordnung zur Bestimmung der potentialabhängigen Ladung. Zu sehen ist, daß in einer Meßzelle 15, die eine Elektrolytlösung 20 enthält eine Referenzelektrode 10 eingebracht wird, die beispielsweise aus einer aufgewickelten Kohlenstofftuchelektrode besteht. Auf die Kohlenstofftücher ist dabei zum Beispiel mittels eines Sprayverfahrens Aluminium aufgebracht. Die erste Elektrode 1 und die zweite Elektrode 5, deren maximale Ladungen bestimmt werden sollen, sind durch einen Separator 3 voneinander getrennt. Die Spannung zwischen der ersten und der zweiten Elektrode wurde auf 0 V eingestellt.

Im folgenden wird eine Potentialdifferenz zwischen der Elektrode 1 und der Referenzelektrode 10 eingestellt. Mittels der in Figur 2B gezeigten Schaltungsanordnung konnte mit Hilfe des Spannungsteilers 25 eine beliebige Potentialdifferenz beispielsweise im Bereich zwischen 0 und 3 V eingestellt werden. Als Gleichspannungsquelle 30 diente beispielsweise eine Batterie. Die Referenzelektrode 10 und die Elektrode 1 sind an den Meßpunkten 39 beziehungsweise 35 in die Schaltungsanordnung der Figur 1B integriert. Durch einen Frequenzgang-Analysator 60 wird zwischen der ersten Elektrode 1 und der zweiten Elektrode 5, die an 41 in Fig. 2B angeschlossen ist, eine Wechselspannung von z.B. 5 mV aufgeprägt. Der Vorwiderstand 40 in der Schaltungsanordnung von Figur 2B gewährleistet, daß die resultierende Stromantwort durch die aus den Elektroden 1 und 5 gebildete Zelle fließt und nicht über den Spannungsteiler 25 und die Batterie abfließt.

Nachdem sich die Potentialdifferenz zwischen der Referenzelektrode und der Elektrode 1 nach 1 bis 2 Stunden stabilisiert hatte, wurde eine Impedanzmessung zwischen den Elektroden 1 und 5 bei einer kleinen Amplitude von etwa 5 mV durchgeführt, um die differentielle Kapazität der aus den Elektroden 1 und 5 gebildeten Zelle zu messen. Die Elektrode 5 hat gegenüber der Referenzelektrode offensichtlich das gleiche Potential wie die Elektrode 1, da sich Elektrode 1 und 5 nur durch die zur Impedanzmessung aufgeprägte kleine Wechselspannung von 5 mV unterscheiden. Mittels verschiedener Einstellungen am Spannungsteiler 25 konnte dabei die potentialabhängige Kapazität der Elektrode 1 bei verschiedenen negativen Potentialdifferenzen zwischen der Elektrode und der Referenzelektrode bestimmt werden. Nachdem die Polung der Batterie vertauscht worden war, konnte auf gleiche Weise die Kapazität der Elektrode bei positiver Potentialdifferenz gegenüber der Referenzelektrode gemessen werden. Die Referenzelektrode 10 bleibt dabei beim Ruhepotential, da sie eine wesentlich größere Fläche besitzt, als die beiden anderen Elektroden 1 oder 5 (erste und zweite Elektrode beispielsweise 1,2 cm$^2$, Referenzelektrode beispielsweise zirka 100 cm$^2$). Der Elektrolyt wurde während der Messungen mit Hilfe eines Rührfisches gerührt, so daß sich der im Elektrolyten möglicherweise ausbildende Konzentrationsgradient schneller ausgleichen konnte. Der Abstand zwischen der ersten und zweiten Elektrode betrug

beispielsweise etwa 28 $\mu$m und die Menge des Elektrolyten betrug beispielsweise zirka 30 ml. Als Elektrolyt wurde bei den Messungen eine Lösung aus 0,5 bis 1,5 M Tetraethylammoniumtetrafluoroborat $(C_2H_5)_4NBF_4$ in 100 % Acetonitril verwendet. Die beiden ersten und zweiten Elektroden 1,5 wurden vor der Messung getrocknet.

Figur 2C zeigt eine Meßkurve, die mittels der in den Figuren 2A und 2B skizzierten Meßanordnung erhalten wurde. Dabei ist die differentielle, potentialabhängige Kapazität in $F/cm^3$ gegen die Potentialdifferenz zwischen der aus den Elektroden 1 und 5 gebildeten Zelle und der Referenzelektrode 10 aufgetragen. Dabei sind rechts vom Nullpunkt der x-Achse die positiven Potentialdifferenzen zwischen dieser Zelle und der Referenzelektrode aufgetragen und links vom Nullpunkt der x-Achse die negativen Potentialdifferenzen. Zu sehen ist, daß sich die Kapazitätsverläufe zwischen positivem und negativem Potential unterscheiden. Diese Eigenschaft ist von den Erfindern überraschenderweise gefunden worden und ist auf das unterschiedliche Verhalten der Anionen und Kationen des Elektrolyten im elektrischen Feld zurückzuführen. Dabei spielen die unterschiedlichen Volumina der solvatisierten positiv und negativ geladenen Ionen, im Fall der oben beschriebenen Elektrolytlösung also Tetraethylammonium-Kationen und Tetrafluoroborat-Anionen genauso eine wichtige Rolle, wie deren Beweglichkeit in der Elektrolytlösung und in den Poren der Elektrode, sowie die Ladungen der Ionen. Die Elektroden 1 und 5 oder auch 10 bestehen im Fall der Fig. 2C aus einer Aluminiumfolie mit einer Dicke von beispielsweise etwa 30 $\mu$m, auf die Aktivkohlenstoffpulver mit einer Dicke von etwa 100 $\mu$m aufgebracht wurde. Die Dichte der Kohlenstoffschichten der Elektroden 1 und 5 betrug etwa 0,71 $g/cm^3$. Somit zeigt die Figur 2C deutlich, daß selbst Elektroden, die aus dem gleichen Elektrodenmaterial mit dem gleichen Design und Abmessungen bestehen bei entgegengesetzter Polung unterschiedliche differentielle, potentialabhängige Kapazitäten zeigen. Als Referenzelektrode wurde eine Kohlenstoffgewebeelektrode verwendet, die gegenüber den Arbeitselektroden eine große Oberfläche aufweist.

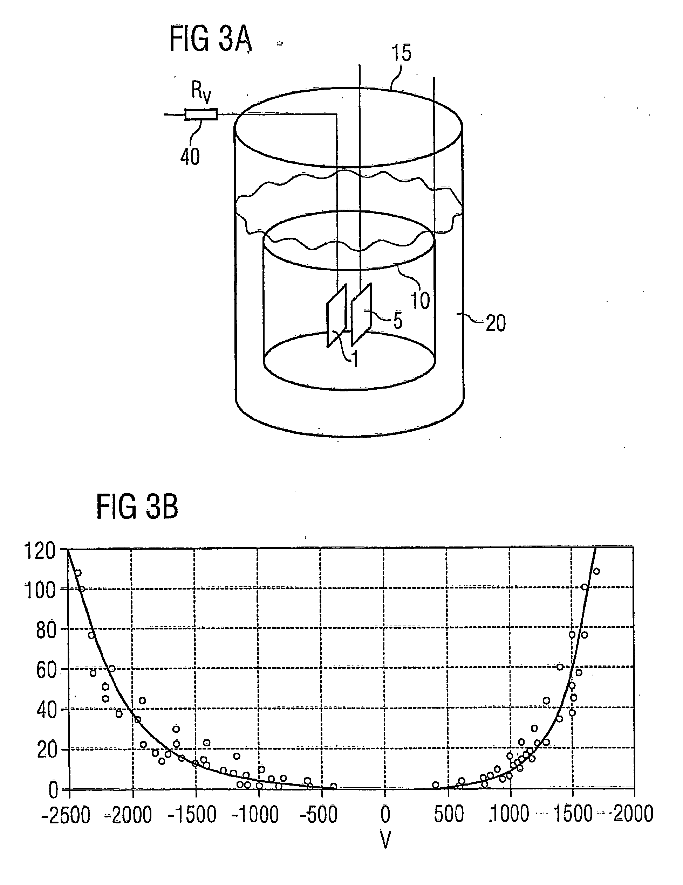

Figur 3A zeigt schematisch einen Versuchsaufbau zur Bestimmung des Leckstromes der zwischen den Elektroden 1 und 5 durch den Elektrolyt 20 fließt, wenn eine bestimmte Potentialdifferenz zwischen der Referenzelektrode 10 und der ersten Elektrode 1 als Arbeitselektrode, eingestellt wird. Die Leckstrommessungen dienen dazu, die positiven beziehungsweise negativen Potentialgrenzen, bis zu der eine Elektrode maximal aufgeladen werden kann, herauszufinden. Sie dienen also dazu, die bereits beschriebene kritische Ladungsdichte zu bestimmen. Darunter wird die maximale Ladung pro Volumen oder Masse der Elektroden verstanden, die der Elektrode zugeführt werden kann, ohne daß sie das Korrosionspotential erreicht. Beim Korrosionspotential kommt es zu elektrochemischen Prozessen an der Elektrode, die die Lebensdauer der Elektrode beeinträchtigen und beispielsweise zu einer Zersetzung des Elektrolyten unter Gasbildung führen können. Die kritische Ladungsdichte gibt also sozusagen die maximal zuführbare Ladung je Volumen oder Masse der Elektrode an.

Zwischen der Arbeitselektrode 1 und der Referenzelektrode 10, beispielsweise der oben erwähnten Kohlenstoffgewebeelektrode wird die Spannung ausgehend von 0 V stufenweise erhöht und jeweils über einen Zeitraum von etwa 3 Stunden konstant gehalten. Dabei wird der zwischen der Arbeitselektrode 1 und der Gegenelektrode 5 durch den Elektrolyt fließende Leckstrom bestimmt. Um ein rauschfreies Meßsignal zu erhalten, wurde vor die Meßanordnung 15 noch ein Vorwiderstand 40 (in etwa 500 $\Omega$) geschaltet. Das Potential der Gegenelektrode gegenüber der Referenzelektrode wurde durch ein zusätzliches Digitalvoltmeter aufgezeichnet. Die Fläche der Arbeits- und der Gegenelektrode betrug jeweils etwa 1 $cm^2$, die der Referenzelektrode wieder etwa 100 $cm^2$. Der Abstand zwischen Arbeits- und Gegenelektrode betrug etwa 1 cm. Die Messung wurde in dem oben genannten Elektrolyten bei Raumtemperatur durchgeführt. Die Elektrolytmenge betrug dabei zirka 30 ml. Die Arbeits-, die Gegenelektrode und die Referenzelektrode wurden vor der Messung bei 90° C im Vakuum ausgeheizt.

Figur 3B zeigt eine mittels der oben genannten Leckstrommessung erhaltene Meßkurve. Dabei ist der Leckstrom in Abhängigkeit von der Potentialdifferenz zwischen der Arbeitselektrode 1 und der Referenzelektrode 10 aufgetragen.

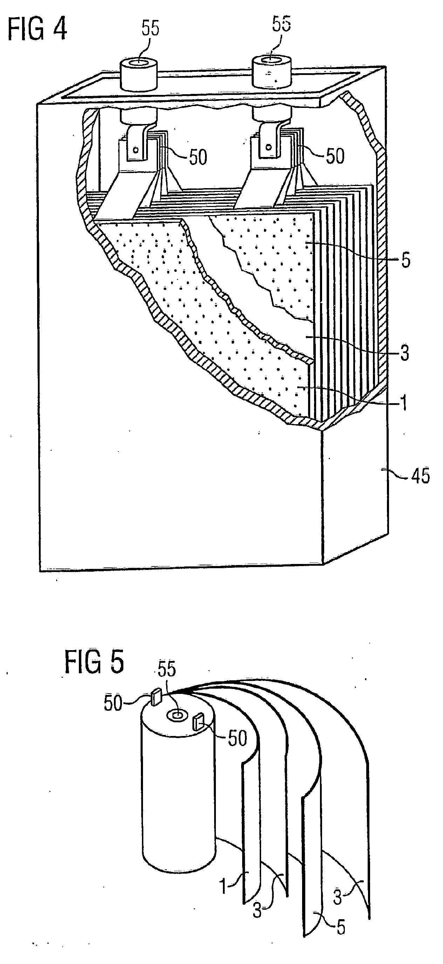

Figur 4 zeigt eine mögliche Variante eines erfindungsgemäßen Doppelschicht-Kondensators, der einen Schichtstapel aus alternierenden ersten Elektrodenschichten 1 und zweiten Elektrodenschichten 5 mit dazwischen befindlichen Separatoren 3 umfaßt. Bei einem erfindungsgemäßen Doppelschicht-Kondensator sind dabei die maximalen Ladungen der ersten und der zweiten Elektrodenschicht bei gleichen Elektrodenmaterialien beispielsweise durch unterschiedliche Dicken der Elektrodenschichten 1,5, angepaßt. Über hervorstehende Metallbändchen 50 können Elektrodenterminals 55, die sich am Gehäuse 45 des Doppelschicht-Kondensators befinden, kontaktiert werden.

Figur 5 zeigt eine weitere mögliche Ausführungsform eines erfindungsgemäßen Doppelschicht-Kondensators in Form eines Kondensatorwickels. Dabei sind um ein Kernrohr, beziehungsweise einen Dorn, nach dessen Entfernung das Loch 55 verbleibt, eine erste Elektrodenschicht 1, ein Separator 3 sowie die zweite Elektrodenschicht 5 aufgewickelt. Auch bei dieser Ausführungsform des Doppelschicht-Kondensators können die jeweiligen Elektrodenschichten über-hervorstehende Bändchen 50 kontaktiert werden und weisen zur Anpassung der maximalen Ladungen beispielsweise unterschiedliche Dicken bei gleichem Elektrodenmaterial auf.

Die Erfindung beschränkt sich nicht auf die hier beschriebenen Ausführungsbeispiele. Weitere Variationen sind sowohl im Bezug auf das Design der Elektroden, als auch im Bezug auf die Bauform des Kondensators möglich. Eine Angleichung der maximalen Ladungen erfolgt dabei stets für einen gegebenen Elektrolyten, da unterschiedliche Elektrolyten unterschiedliche maximale Ladungen bewirken und damit unterschiedliche Maßnahmen zur Angleichung erfordern können.

**Patentansprüche**

1. Doppelschicht-Kondensator,

   - mit zumindest einer ersten (1) und einer zweiten Elektrode (5) mit entgegengesetzter Polung,
   - mit einem Elektrolyt (20), der in Kontakt mit den Elektroden (1,5) steht, **dadurch gekennzeichnet, dass**
   - die von der Polung der Elektroden (1,5) abhängigen maximalen Ladungen von erster (1) und zweiter Elektrode (5), die bis zur Erreichung des kritischen Potentials der jeweiligen Elektrode zugeführt werden können, aneinander angepasst sind und um maximal 5% voneinander abweichen.

2. Doppelschicht-Kondensator nach Anspruch 1, bei dem die Elektroden (1,5) entgegengesetzter Polung unterschiedlich große Flächen aufweisen.

3. Doppelschicht-Kondensator nach einem der Ansprüche 1 oder 2, bei dem die beiden Elektroden (1,5) entgegengesetzter Polung gleiche Elektrodenmaterialien umfassen und unterschiedlich Massen aufweisen.

4. Doppelschicht-Kondensator nach einem der vorhergehenden Ansprüche, bei dem zumindest eine der Elektroden (1, 5) Kohlenstoff umfaßt.

5. Doppelschicht-Kondensator nach dem vorhergehenden Anspruch, bei dem die mindestens eine Elektrode aus einer Gruppe mit folgenden Elektrodenmaterialien ausgewählt ist:

   a) Kohlenstoffpulver,
   b) Kohlenstofftücher,
   c) Entmetallisierte Metallcarbide,
   d) Kohlenstoffaerogele,
   e) Graphitischer Kohlenstoff,
   f) Nanostrukturierter Kohlenstoff,
   g) PVD und/oder CVD-Kohlenstoff.

6. Doppelschicht-Kondensator nach einem der vorhergehenden Ansprüche, bei dem der Elektrolyt (20) ausgewählt ist aus: einem Gel- elektrolyten, einem Polymerelektrolyten und einem Flüssigelektrolyten.

7. Doppelschicht-Kondensator nach einem der vorhergehenden Ansprüche, bei dem

   - der Elektrolyt (20) eine Elektrolytlösung ist, die organische und/oder wäßrige Lösungsmittel umfaßt,
   - zwischen den Elektroden (1,5) ein Separator (3) angeordnet ist.

8. Doppelschicht-Kondensator nach Anspruch 7, bei dem der Separator (3) Papier, Polymermembranen oder Glasfasern umfaßt.

9. Doppelschicht-Kondensator nach einem der vorhergehenden Ansprüche, bei dem beide Elektroden (1,5) als Schichten ausgeformt sind und einen Schichtstapel aus alternierenden ersten (1) und zweiten Elektrodenschichten (5) mit dazwischen angeordneten Separatoren (3) bilden.

10. Doppelschicht-Kondensator nach dem vorhergehenden Anspruch, bei dem der Stapel zu einem Wickel aufgerollt ist.

11. Doppelschicht-Kondensator nach einem der vorherigen Ansprüche ausgebildet als Pseudokondensator, bei dem beide Elektroden (1,5) entweder Metalloxide oder leitfähige Polymere sind.

12. Verwendung eines Doppelschicht-Kondensators nach einem der vorhergehenden Ansprüche in einer Kondensatorbatterie.

13. Verfahren zur Verringerung der Differenz zwischen den unterschiedlichen maximalen Ladungen einer ersten (1) und einer zweiten Doppelschicht-Kondensator-Elektrode (5) mit entgegengesetzter Ladung mit den Verfahrenschritten:

A) Das korrosionsfreie Potentialgebiet des Elektrodenmaterials wird gegenüber einer Referenzelektrode bestimmt,

B) die zu den jeweiligen Grenzen des korrosionsfreien Potentialbereichs gehörende maximale Ladung der ersten (1) und zweiten Elektrode (5) gegenüber der Referenzelektrode werden bestimmt,

C) danach werden die maximalen Ladungen der beiden Elektroden (1,5) so angeglichen, dass sie um maximal 5% voneinander abweichen.

**14.** Verfahren nach dem vorherigen Anspruch, bei dem

- im Verfahrensschritt A) eine Potentialdifferenz zwischen der ersten Elektrode (1) und der Referenzelektrode (10) eingestellt und anschließend eine Korrosionsstrommessung zwischen der ersten Elektrode (1) und der zweiten Elektrode (5) als Gegenelektrode bei der eingestellten Potentialdifferenz durchgeführt wird,

- im Verfahrensschritt B) unter Verwendung der zweiten Elektrode (5) als Gegenelektrode die bis zur Erreichung des oberen kritischen Grenzpotentials auf die erste Elektrode (1) geflossene Ladung durch Integration des Ladestroms bestimmt wird und der gleiche Vorgang bei dem unteren kritischen Grenzpotential wiederholt wird.

**15.** Verfahren nach einem der Ansprüche 13 oder 14, bei dem im Verfahrensschritt C) die Oberfläche derjenigen Elektrode erhöht wird, deren maximale Ladung niedriger ist.

**16.** Verfahren nach einem der Ansprüche 13 bis 15, bei dem

- in den Verfahrenschritten A) und B) für die erste (1) und zweite Elektrode (5) das gleiche Elektrodenmaterial mit den gleichen Abmessungen verwendet wird,

- im Verfahrensschritt C) die Masse derjenigen Elektrode mit der niedrigeren maximalen Ladung erhöht wird.

## Claims

**1.** Double-layer capacitor,

- comprising at least one first (1) and one second electrode (5) having opposite polarity,

- comprising an electrolyte (20), which is in contact with the electrodes (1, 5), **characterized in that**

- the maximum charges - dependent on the polarity of the electrodes (1, 5) - of first (1) and second electrode (5) which can be fed until the critical potential of the respective electrode is reached are adapted to one another and deviate from one another by at most 5%.

**2.** Double-layer capacitor according to Claim 1, wherein the electrodes (1, 5) of opposite polarity have differently sized areas.

**3.** Double-layer capacitor according to either of Claims 1 and 2, wherein the two electrodes (1, 5) of opposite polarity comprise identical electrode materials and have different masses.

**4.** Double-layer capacitor according to any of the preceding claims, wherein at least one of the electrodes (1, 5) comprises carbon.

**5.** Double-layer capacitor according to the preceding claim, wherein the at least one electrode is selected from a group comprising the following electrode materials:

a) carbon powders,
b) carbon cloths,
c) demetallized metal carbides,
d) carbon aerogels,
e) graphitic carbon,
f) nanostructured carbon,
g) PVD and/or CVD carbon.

6. Double-layer capacitor according to any of the preceding claims, wherein the electrolyte (20) is selected from: a gel electrolyte, a polymer electrolyte and a liquid electrolyte.

7. Double-layer capacitor according to any of the preceding claims, wherein

   - the electrolyte (20) is an electrolyte solution comprising organic and/or aqueous solvents,
   - a separator (3) is arranged between the electrodes (1, 5).

8. Double-layer capacitor according to Claim 7, wherein the separator (3) comprises paper, polymer membranes or glass fibres.

9. Double-layer capacitor according to any of the preceding claims, wherein the two electrodes (1, 5) are shaped as layers and form a layer stack composed of alternating first (1) and second electrode layers (5) with separators (3) arranged in between.

10. Double-layer capacitor according to the preceding claim, wherein the stack is rolled up to form a winding.

11. Double-layer capacitor according to any of the preceding claims embodied as a pseudocapacitor, wherein the two electrodes (1, 5) are either metal oxides or conductive polymers.

12. Use of a double-layer capacitor according to any of the preceding claims in a capacitor bank.

13. Method for reducing the difference between the different maximum charges of a first (1) and a second double-layer capacitor electrode (5) having an opposite charge, comprising the following method steps:

   A) the corrosion-free potential region of the electrode material is determined relative to a reference electrode,
   B) the maximum charges of the first (1) and the second electrode (5) which are associated with the respective limits of the corrosion-free potential range relative to the reference electrode are determined,
   C) the maximum charges of the two electrodes (1, 5) are then matched in such a way that they deviate from one another by at most 5%.

14. Method according to the preceding claim, wherein

   - method step A) involves setting a potential difference between the first electrode (1) and the reference electrode (10) and subsequently carrying out a corrosion current measurement between the first electrode (1) and the second electrode (5) as counterelectrode for the potential difference set,
   - method step B) involves determining, using the second electrode (5) as a counterelectrode, the charge that flowed onto the first electrode (1) until the upper critical limit potential was reached, by integrating the charging current, and repeating the same process for the lower critical limit potential.

15. Method according to either of Claims 13 and 14, wherein, in method step C), the surface area of that electrode whose maximum charge is lower is increased.

16. Method according to any of Claims 13 to 15, wherein

   - in method steps A) and B), the same electrode material having the same dimensions is used for the first (1) and the second electrode (5),
   - in method step C), the mass of that electrode having the lower maximum charge is increased.


**Revendications**

1. Condensateur à couche double

   - comprenant au moins une première électrode (1) et une deuxième électrode (5) de polarité opposée,
   - comprenant au moins un électrolyte (20) qui est en contact avec les électrodes (1, 5), **caractérisé en ce que**
   - les charges maximums qui dépendent de la polarité de l'électrode (1, 5) de la première électrode (1) et de la deuxième électrode (5), qui peuvent être apportées jusqu'à l'obtention du potentiel critique de l'électrode respective, sont adaptées l'une à l'autre et diffèrent l'une de l'autre de 5 % au maximum.

2. Condensateur à couche double suivant la revendication 1, dans lequel les électrodes (1, 5) de polarités opposées ont des surfaces de dimensions différentes.

3. Condensateur à couche double suivant l'une des revendications 1 ou 2, dans lequel les deux électrodes (1, 5) de polarités opposées comprennent des matériaux d'électrode identiques et ont des masses différentes.

4. Condensateur à couche double suivant l'une des revendications précédentes, dans lequel au moins l'une des électrodes (1, 5) comprend du carbone.

5. Condensateur à couche double suivant la revendication précédente, dans lequel la au moins une électrode est choisie dans un groupe ayant les matériaux d'électrode suivants :

   a) poudre de carbone,
   b) toile de carbone,
   c) carbures métallique démétallisés,
   d) aérogels de carbone,
   e) carbone graphitique,
   f) carbone nanostructuré,
   g) carbone PVD et/ou CVD.

6. Condensateur à couche doublé suivant l'une des revendications précédentes, dans lequel l'électrolyte (20) est sélectionné parmi : un électrolyte en gel, un électrolyte polymère et un électrolyte liquide.

7. Condensateur à couche double suivant l'une des revendications précédentes, dans lequel

   - l'électrolyte (20) est une solution d'électrolyte, qui comprend des solvants organiques et/ou aqueux,
   - un séparateur (3) est interposé entre les électrodes (1, 5).

8. Condensateur à couche double suivant la revendication 7, dans lequel le séparateur (3) comprend du papier, des membranes en polymère ou des fibres de verre.

9. Condensateur à couche double suivant l'une des revendications précédentes, dans lequel les deux électrodes (1, 5) sont conformées en couches et forment un empilement de couches constitué de premières couches (1) d'électrodes et de deuxièmes couches (5) d'électrodes ayant entre elles des séparateurs (3).

10. Condensateur à couche double suivant la revendication précédente, dans lequel l'empilement est enroulé en un enroulement.

11. Condensateur à couche double suivant l'une des revendications précédentes, constitué en pseudocondensateur, dans lequel deux électrodes (1, 5) sont des oxydes métalliques ou des polymères conducteurs.

12. Utilisation d'un condensateur à couche double suivant l'une des revendications précédentes dans une batterie de condensateurs.

13. Procédé pour diminuer la différence entre les charges maximums différentes d'une première électrode (1) et d'une deuxième électrode (5) de condensateur à couche double de polarités opposées comprenant les stades de procédé dans lesquels :

   A) on détermine le domaine de potentiel sans corrosion des matériaux d'électrodes par rapport à une électrode de référence,
   B) on détermine la charge maximum faisant partie d'une limite respective du domaine de potentiel sans corrosion de la première électrode (1) et de la deuxième électrode (5) par rapport à l'électrode de référence,
   C) on égalise ensuite les charges maximums des deux électrodes (1, 5), de manière à ce qu'elles s'écartent au maximum de 5 % l'une de l'autre.

14. Procédé suivant la revendication précédente, dans lequel

- dans le stade A) du procédé, on établit une différence de potentiel entre la première électrode (1) et l'électrode (10) de référence, et on effectue ensuite une mesure du courant de corrosion entre la première électrode (1) et la deuxième électrode (5) servant de contre-électrode à la différence de potentiel établie,
- dans le stade B) du procédé, en utilisant la deuxième électrode (5) comme contre-électrode, on détermine, par intégration du courant de charge, la charge qui passe sur la première électrode (1) jusqu'à ce que le potentiel limite critique supérieur soit atteint et on répète la même opération pour le potentiel limite critique inférieur.

15. Procédé suivant l'une des revendications 13 ou 14, dans lequel, dans le stade C) du procédé, on augmente la surface de l'électrode dont la charge maximum est la plus petite.

16. Procédé suivant l'une des revendications 13 à 15, dans lequel

- dans les stades A) et B) du procédé, on utilise pour la première électrode (1) et la deuxième électrode (5) les mêmes matériaux d'électrode ayant les mêmes dimensions,
- dans le stade C) du procédé, on augmente la masse de l'électrode ayant la charge maximum la plus petite.

FIG 1

# FIG 2A

# FIG 2B

# FIG 2C

## FIG 3A

## FIG 3B

## FIG 4

## FIG 5

**EP 1 552 538 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6064562 A
- US 6222723 B1